(19) Europäisches Patentamt
European Patent Office
Office européen des brevets

(11) Veröffentlichungsnummer : **0 034 736**
**B1**

(12) # EUROPÄISCHE PATENTSCHRIFT

(45) Veröffentlichungstag der Patentschrift : **07.11.84**

(51) Int. Cl.³ : **E 04 H 1/02**, E 04 D 11/00, E 02 D 17/20

(21) Anmeldenummer : **81100841.6**

(22) Anmeldetag : **06.02.81**

(54) **Überdeckungsbauwerk.**

(30) Priorität : **08.02.80 CH 1009/80**

(43) Veröffentlichungstag der Anmeldung : **02.09.81 Patentblatt 81/35**

(45) Bekanntmachung des Hinweises auf die Patenterteilung : **07.11.84 Patentblatt 84/45**

(84) Benannte Vertragsstaaten : **AT BE CH DE FR GB IT LI LU NL SE**

(56) Entgegenhaltungen :
**CA-A- 1 009 819**
**DE-A- 2 303 927**
**DE-C- 404 197**

(73) Patentinhaber : **Geotech Lizenz AG**
**Geissbergstrasse 59**
**CH-5400 Ennetbaden (CH)**

(72) Erfinder : **Jaecklin, Felix P., Dr.**
**Geissbergstrasse 59**
**CH-5400 Ennetbaden (CH)**

(74) Vertreter : **Fiedler, Otto Karl, Dipl.-Ing.**
**Hemminger Strasse 4**
**D-7015 Korntal-Münchingen 2 (DE)**

**EP 0 034 736 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Überdeckungsbauwerk nach dem Oberbegriff des Anspruchs 1. Ein solches Bauwerk kann grundsätzlich für sehr verschiedenartige Überdeckungsprobleme eingesetzt werden, z. B. für die Abdeckung und den Schutz von erosionsgefährdeten Boden- und Geländeabschnitten, aber auch für die Überdeckung von Hohlräumen wie Nutzräumen, wobei zu der Abdeckungs- und Stützfunktion eine Tragfunktion mit Überspannung des Hohlraumes hinzutritt.

Ein Überdeckungsbauwerk der eingangs genannten Art ist bekannt aus der CA-A-1 009 819. Dort ist eine Deckkonstruktion mit einer starkwandigen, geneigt angeordneten Tragplatte vorgesehen, die rinnenförmige Aufnahmen für eine auf ihrer Oberfläche liegende Erdfüllung aufweist und vollständig innerhalb dieser Füllung, d. h. mit ihrer Oberfläche vergleichsweise tief unter der Erdoberfläche angeordnet ist. Die oberhalb der Tragplatte liegende Erdschicht ist bei dieser Konstruktion nicht bzw. nur durch ihre eigene Scherfestigkeit gegen Abgleiten gesichert. Ausserdem erfordert die Herstellung solcher grossflächigen und starkwandigen Tragplatten für grosse Auflagemassen einen hohen Aufwand. Dies trifft auch die Verlegung bzw. den Einbau solcher Tragplatten zu.

Aufgabe der Erfindung ist daher die Schaffung eines Überdeckungsbauwerkes, das sich durch vergleichsweise geringen Aufwand für die Bildung von ausreichend starken, insbesondere isolierfähigen Deckschichten sowie durch leicht erzielbare ästhetische Gestaltung und insbesondere Anpassung an eine natürliche, vor allem mit Pflanzenbewuchs versehene Umgebung auszeichnet. Die erfindungsgemässe Lösung dieser Aufgabe kennzeichnet sich durch die Merkmale des Anspruchs 1.

Die danach vorgesehene Deckkonstruktion mit plattenbalkenartigen Trägern, die nach oben vorstehende Balkenpartien aufweisen, erlauben mit vergleichsweise geringem Aufwand die Bildung starker, tragfähiger Deckschichten in Form einer Schüttfüllung aus billigem Material, beispielsweise Erdreich, vor allem auch humusreichem Erdmaterial, Lehm, Kies und dergleichen. Ebenso kommen aber auch künstliche oder in besonderer Weise aufbereitete Schüttfüllungsmassen in Betracht wie Granulate aus Beton, mehr oder weniger porösem Kunststoff und dergleichen. Damit lassen sich für die verschiedensten Anwendungen und Anforderungen jeweils die entsprechenden Eigenschaften hinsichtlich Festigkeit, Isolierfähigkeit, Bewuchsfähigkeit für verschiedene Pflanzen und auch hinsichtlich des ästhetischen Äusseren erfüllen. In Sonderfällen kommt sogar eine wässrige oder aus Aufschwemmungen bestehende oder mit Flüssigkeit, insbesondere mit Nährflüssigkeiten für Pflanzen, stärker versetzte Schüttfüllung in Betracht. Damit lassen sich auch Hydrokulturen für besondere ästhetische Effekte oder für Nutzpflanzen auf einfache Weise herstellen. Dabei können insbesondere auch die Begrenzungsvorsprünge der Schüttfüllungsaufnahmen den jeweiligen Anforderungen leicht angepasst werden, etwa hinsichtlich einer blossen Rutschsicherung für vergleichsweise kohärentes Schüttmaterial oder als flüssigkeitsdichtes Behältnis für Anwendungen der letztgenannten Art.

Weitere Merkmale und Vorteile der Erfindung ergeben sich aus den abhängigen Ansprüchen and aus der folgenden Beschreibung von Ausführungsbeispielen, die in den Zeichnungen schematisch angedeutet sind. Hierin zeigt :

Figur 1 einen Vertikalschnitt eines Überdeckungstragwerkes für ein Hohlraumsystem mit bepflanzbarer Aussenabdeckung,

Figur 2 einen Vertikalschnitt in Fallrichtung einer Anordnung von sich parallel zu einer Deckfläche erstreckenden Schüttfüllungsaufnahmen mit gesonderten Deck- und Tragelementen,

Figur 3 eine Anordnung ähnlich Fig. 2, jedoch mit untergehängter Flüssigkeitsableitung,

Figur 4 eine Anordnung ähnlich Fig. 3, jedoch mit einstückiger Ausbildung von Schüttfüllungsaufnahmen und Tragelementen,

Figur 5 wiederum einen Teil-Vertikalschnitt in Fallrichtung der Deckfläche für trogartige Deckelemente bzw. Schüttfüllungsaufnahmen mit besonders angepasstem Tragelement,

Figur 6 einen ebensolchen Teil-Vertikalschnitt mit drei verschiedenen Querschnittsformen von Deckelementen zur Bildung von Schüttfüllungsaufnahmen,

Figur 7 eine perspektivische Teil-Ansicht einer Deckelementanordnung mit verschiedenartigen, rippenförmigen Begrenzungsvorsprüngen für Schüttfüllungsaufnahmen,

Figur 8 eine perspektivische Teil-Ansicht einer einstückigen Ausführung eines Trag- und Deckelementes mit rippenförmigen Begrenzungsvorsprüngen,

Figur 9 eine perspektivische Teil-Ansicht einer weiteren einstückigen Trag- und Deckelementausführung mit verschiedenartigen Begrenzungsvorsprüngen und

Figur 10 einen Teil-Vertikalschnitt einer Befestigungsanordnung für Begrenzungsvorsprünge in grösserem Massstab.

Fig. 1 zeigt ein Bauwerk mit verschiedenen Nutzräumen N und einem mit Erdreich gefüllten Böschungsraum B. Diese Räume sind beispielsweise durch räumliches Fachwerk aus Säulen S und Horizontal- sowie Schrägträgern TH bzw. TE aus armiertem Beton begrenzt. Die Schrägträger TE bilden äussere Tragelemente, die sich längs der geneigten Deckflächen DF erstrecken. Vorzugsweise laufen die Schrägträger bzw. Tragelemente TE in Fallrichtung der Deckfläche und tragen an ihrer Aussenseite quer zur Fallrichtung verlaufende Deckelemente DE, die eine Vielzahl von Schüttfüllungsaufnahmen SA bilden. Hierzu sind die Deckelemente mit rippenförmigen, im Beispielsfall in Horizontalrichtung bzw. längs der Höhenlinien der Deckflächen verlaufenden Begrenzungsvorsprüngen V sowie mit geschlossenen Bodenflächen als Schüttgutauflagen SE versehen. Durch die Vorsprünge V sind die Schüttfüllungsaufnahmen in Fallrichtung der Deckfläche begrenzt, so dass die gesamte Schüttfüllung einen sicheren Halt gegen Abrutschen hat. Damit lassen sich weitgehend unabhängig vom Böschungswinkel des Schüttmaterials auch steile Deckflächen mit einer begrünbaren Schüttfüllung versehen.

Die gleichartige Fortsetzung der Anordung von Schüttfüllungsaufnahmen über dem Böschungsraum veranschaulicht die Möglichkeit, unabhängig von einer hohlraumüberspannenden Tragfunktion des Bauwerks Geländeböschungen mit einer gegen Abrutschen und Erosion gesicherten Schüttfüllungsüberdeckung zu versehen. Derartige Ausführungen kommen insbesondere auch für Fluss- und Seedeiche im Flutbereich sowie für die Sicherung anderer, erosionsgefährdeter Böschungen in Betracht.

Die Deckelemente können mit den Tragelementen durch an sich übliche Formschlusselemente verbunden und damit gegen Verschiebung längs der Deckflächen gesichert werden, beispielsweise mit an die Trag- und Deckelemente angeformten, komplementären Verzahnungen, durch nachträglich eingetriebene oder in vorbereitete Ausnehmungen eingesetzte Bolzen und dergleichen. Weiterhin können die Tragelemente im Interesse der Materialeinsparung als langgestreckte Biegeträger, vorzugsweise in Fallrichtung verlaufend, ausgebildet werden, gegebenenfalls aber auch als flächenhafte Plattenelemente, welche die jeweilige Deckfläche nicht nur in einer Richtung, sonderen auch mindestens teilweise in einer zweiten Dimension überspannen. Langgestreckte Biegeträger können dabei gegebenenfalls auch im Winkel zueinander angeordnet werden, wodurch sich innerhalb des tragenden Fachwerkes besonders stabile Schrägabstützungen ergeben. Eine derartige Anordnung kommt auch bei pyramiden- oder kegelförmigen Deckflächenanordnungen in Betracht.

Fig. 2 und 3 zeigen verschiedene Querschnittsformen von Deckelementen zur Bildung von Schüttfüllungsaufnahmen SA, jeweils befestigt an mindestens einem die Deckflächen überspannenden Tragelement. Nach Fig. 2 sind als L- bzw. T-Profilträger ausgebildete Deckelemente DE bzw. DEI mittels Abstandselementen A auf einem als durchgehende Platte ausgebildeten Tragelement TEI befestigt. Jeweils mindestens einer der Profilschenkel der Deckelemente dient als Schüttgutauflage SE, während jeweils ein quer dazu angeordneter Profilschenkel als Begrenzungsvorsprung V für die benachbarte Schüttfüllungsaufnahme wirkt. Das T-Profil bietet den Vorteil, dass die Trennungsfuge zwischen benachbarten Deckelementen in einem leicht zugänglichen Profilbereich liegt. Etwa erforderliche Abdichtungarbeiten werden dadurch erleichtert. Andererseits ist es gerade bei Verwendung eines als durchgehende Platte ausgebildeten Tragelementes gegebenenfalls erwünscht, die Schüttfüllungsaufnahmen mit Durchlässen für die Drainage zu versehen, wobei die darunterliegende Platte als Ableitungselement zur Abdichtung des überdeckten Hohlraumes wirkt. Bei dieser Anordnung erübrigt sich u. U. eine gesonderte Befestigung der Deckelemente am Tragelement, weil die in Fallrichtung wirkende Schubkraft durch ein am Fusse des Tragelementes angeordnetes Wiederlager W aufgenommen wird. Bei der Ausführung nach Fig. 3 sind als U-Profilträger ausgebildete Deckelemente DE2 beispielsweise auf langgestreckten, in Fallrichtung verlaufenden Biegeträgern als Tragelemente TE befestigt. Weiterhin sind U-Profilträger mit über die Schenkelabschnitte des U-Profils beiderseits vorstehenden Flanschabschnitten FA angedeutet, welche den Vorteil der Materialersparnis und wiederum denjenigen der leichten Zugänglichkeit der Trennfuge bieten. Gegebenenfalls kann ein solcher vorstehender Flanschabschnitt nur auf einer Profilseite vorgesehen werden. In diesem Beispiel ist weiterhin auf der Unterseite der Abdeckanordnung eine Platte PL als Ableitungs- und Abdichtungselement für den darunterliegenden Hohlraum mit Abstand an die Unterseite der Tragelemente TE gehängt.

Fig. 4 zeigt ein einstückiges Trag- und Deckelement TD mit einem plattenförmigen Grundkörper G sowie daran angeformte, rippenförmige Begrenzungsvorsprüngen VI. Für die Drainage der Schüttfüllungsaufnahmen SA sind hier in den Begrenzungsvorsprüngen bzw. im plattenförmigen Grundkörper Durchlässe D und poröse Abschnitte P vorgesehen. Im allgemeinen ist eine Drainage ohne Druchbrechung des Grundkörpers ausreichend, jedoch kann die Fernhaltung des abfliessenden Wassers von weiter unten liegenden Bauabschnitten die Ableitung zur Innenseite der Überdeckung hin erforderlich machen. Hierfür ist wiederum eine Ableitungs- und Abdichtungsplatte PL untergehängt. Im übrigen bieten die Schüttfüllungsaufnahmen mit ihren im wesentlichen geschlossenen Bodenflächen den Vorteil einer Bewässerungs-Vorratshaltung, wie es zur Regulierung des natürlichen Wasserhaushaltes, zur Vermeidung starker Abschwemmungen und im Interesse des Bewuchses vorteilhaft ist.

Fig. 5 zeigt wiederum Deckelemente DE4 mit U-Profil, jedoch in horizontaler Anordung der Scheitelabschnitte, die auf treppenförmig gestuften Tragelementen TE2 mit stufenförmigen Auflagen STA gegen Abrutschen formschlüssig gesichert sind. Die Deckelemente DE4 sind mit unterschiedlich hohen Schenkelabschnitten als Begrenzungsvorsprünge V2 bzw. V3 versehen. Hierdurch ergibt sich an der rückwärtigen Seite der Schüttfüllungsaufnahmen SA ein Abschluss des Stufenzwischenraumes. Das Höhenverhältnis der Schenkelabschnitte kann im übrigen dem Böschungswinkel des Schüttmaterials angepasst werden. Weiterhin sind in Fig. 5 als Variante Deckelemente DE5 mit sternförmigem Dreischenkelquerschnitt angedeutet. Solche Deckelemente können mit symmetrischem Querschnitt ausgebildet werden, was Herstellungs- und Montagevorteile mit sich bringt. Einer der einspringenden Profilwinkel ist in der dargestellten Ausführung auf die Tragelementstufen aufgesetzt, während der dritte Profilschenkel einen Begrenzungsvorsprung V4 für eine Schüttfüllungsaufnahme bildet.

Weiterhin zeigt Fig. 6 verschiedene, im Querschnitt hakenförmig gekrümmte bzw. polygonal ausgebildete oder gegen das Lot auf die Deckfläche entgegen der Fallrichtung geneigte Begrenzungsvorsprünge V5, V6, V7. Solche Ausführungen kommen insbesondere bei steilen Deckflächen und bei Schüttmaterial mit geringem Böschungswinkel in Betracht.

Fig. 7 zeigt als Profilträger ausgebildete Deckelemente DE5 — horizontal angeordnet zu darunterliegenden, langgestreckten Tragelementen TE — mit rippenförmigen Begrenzungsvorsprüngen V, die nun jedoch unter einem spitzen Winkel von vorzugsweise höchstens etwa 20° zu den Höhenlinien der Deckfläche verlaufend angeordnet sind. Diese vergleichsweise geringe Schräganordnung der fallrichtungsseitigen Begrenzung der Schüttfüllungsaufnahmen SA ermöglicht eine Drainage ohne Durchbrechungen der Bodenfläche und der Begrenzungsrippen, wobei die Stärke des Drainageabflusses durch die Rippenneigung leicht den jeweils vorliegenden Bewässerungs- und Bodenverhältnissen angepasst werden kann. Es ergeben sich ausserdem lange Fliesswege und eine hohe Verweilzeit des aufgenommenen Wassers. Die endliche Wasserabführung kann mittels eines seitlichen Drainagekanals oder aber auch durch zickzackförmige, wechselweise gegensinnig geneigte Anordnung der Rippen erreicht werden. Für derartige Ausführungen empfiehlt sich eine Schüttfüllung, die wenigstens zu einem Zehntel aus grob-porösem Material besteht. Auch für Schüttgutaufnahmen mit andersartigen Drainageanordnungen empfiehlt sich eine solche Zusammensetzung des Schüttmaterials.

Aus Fig. 7 ist weiter eine mit wenigstens einem der beiderseitigen Endabschnitte über die Tragelemente TE frei auskragende Anordnung der Deckelemente DE5 ersichtlich. Diese Anordnung, die unabhängig von der Winkelanordung der Begrenzungsrippen ist, bietet den Vorteil einer statisch günstigen Ausnutzung der Tragfähigkeit der durch das Gewicht der Schüttfüllung auf Biegung beanspruchten Deckelemente.

Bei vergleichsweise steilen Deckflächen kommt übrigens eine Verstärkung der Haftung zwischen Schüttfüllung und Bodenfläche bzw. Schüttgutauflage durch geeignete Strukturierung der Schüttfüllungsauflage SE in Betracht, wie dies in Fig. 7 in dem mit ST bezeichneten Bereich angedeutet ist.

Schräg wie auch horizontal verlaufende Begrenzungsrippen können im übrigen gleichermassen mit Vorteil einstückig an einen plattenförmigen Grundkörper G eines Deckelementes oder kombinierten Deck- und Tragelementes angeformt werden, wie dies in Fig. 8 angedeutet ist. Hierbei kommen, wenn Gesichtspunkte der Drainage nicht im Vordergrund stehen, auch stärkere Neigungswinkel gegen Höhenlinien in Betracht. Insbesondere können ferner sich schneidende Rippen vorgesehen werden, zusätzlich überdies auch in Fallrichtung verlaufende Rippen Vv wie dies in Fig. 8 ebenfalls angedeutet ist. Bei konsequentem Ausbau dieser Konstruktionsweise ergeben sich mehr oder weniger gleichmässig verteilte Verrippungen, die nicht nur hervorragend als Schüttfüllungsaufnahmen geeignet sind, sondern auch eine erhöhte Tragfähigkeit unter optimaler Materialausnutzung erlauben und daher insbesondere für kombinierte Deck- und Tragelemente vorteilhaft sind.

Fig. 9 zeigt verschiedene Formen und Anordnungen von Begrenzungsvorsprüngen in Verbindung mit einem plattenförmigen Grundkörper G eines Deck- und/oder Tragelementes. Die Begrenzungsvorsprünge V8 sind als vergleichsweise kurze Rippenabschnitte ausgebildet, die in unterschiedlicher Winkelanordnung bezüglich der Fallrichtung an den Grundkörper angeformt sind. Diese Rippenabschnitte sind im Beispielsfall jeweils in grösserer Anzahl längs je einer Basislinie BL mit gegenseitigem Abstand verteilt angeordnet, wobei sich die Basislinien schneiden. Damit kann eine für viele Fälle ausreichende Haltewirkung für die Schüttfüllung erzielt werden, während andererseits an Material eingespart und herstellungsaufwendige Kreuzungsstellen vermieden werden.

Darüberhinaus kommen auch in anderer Weise ausgebildete, block- oder stabförmige Begrenzungsvorsprünge in Betracht, wofür die Vorsprünge V9 ein Beispiel bieten. Auch damit lässt sich in bestimmten Fällen eine Schüttfüllungshalterung erreichen, insbesondere für Anwendungsfälle, bei denen es nicht auf eine definierte Lokalisierung der Schüttfüllung ankommt, sondern nur auf eine begrenzte Rückhaltewirkung. Dies trifft beispielsweise für erosionsgefährdete Deichböschungen zu, vor allem bei Bespülung mit sand- oder schlickhaltigem Wasser. Hier genügen vergleichsweise schmale Begrenzungsvorsprünge, um die Ablagerung und Halterung des vom Wasser mitgeführten Festmaterials zu bewirken.

Begrenzungsvorsprünge der verschiedensten Arten können im übrigen nicht nur an stab- oder plattenförmige Tragelemente bzw. Trag- oder Deckelement-Grundkörper einstückig angeformt, sondern in diese auch nachträglich mit Formschlussverbindungen eingesetzt werden. Fig. 10 zeigt ein Beispiel einer hierfür geeigneten Formschlussverbindung FS mit einem Fussabschnitt eines Begrenzungsvorsprunges V10, der einen im Bereich einer Plattenaussparung PA angeordneten Armierungsabschnitt AR hintergreift. Über die damit gegebene Schubsicherung hinaus sorgt ein Stützansatz SN für eine Kippsicherung des Begrenzungsvorsprunges gegen die Bean-

spruchung in Fallrichtung.

**Ansprüche**

1. Überdeckungsbauwerk mit mindestens einer Schüttgutauflage und einer Aufnahmen (SA) für das Schüttgut bildenden, geneigten Deckkonstruktion, dadurch gekennzeichnet, dass die Deckkonstruktion plattenbalkenartige Träger (DE, DE1-DE5) mit nach oben vorstehenden Balkenpartien (V, V1-V7) aufweist, die das Abgleiten des Schüttgutes verhindern und die zusammen mit den untenliegenden Plattenpartien (SE) die erwähnten Aufnahmen (SA) bilden.

2. Überdeckungsbauwerk nach Anspruch 1, dadurch gekennzeichnet, dass wenigstens eine nach oben vorstehende Balkenpartie als rippenförmiger Begrenzungsvorsprung (V, V1) für eine Schüttfüllungsaufnahme (SA) ausgebildet ist und sich über mindestens einen Teil der Deckfläche (DF) im Winkel, vorzugsweise annähernd rechtwinklig, zur Fallrichtung erstreckt (Fig. 7).

3. Überdeckungsbauwerk nach Anspruch 2, dadurch gekennzeichnet, dass sich wenigstens ein als Rippe ausgebildeter Begrenzungsvorsprung (V) unter einem spitzen Winkel von vorzugsweise höchstens etwa 20° zu den Höhenlinien der Deckfläche (DF) erstreckt (Fig. 7).

4. Überdeckungsbauwerk nach Anspruch 2 oder 3, gekennzeichnet durch wenigstens zwei sich schneidende oder längs sich schneidender Linien verlaufende, als Rippen ausgebildete Begrenzungsvorsprünge (V, Fig. 8).

5. Überdeckungsbauwerk nach einem der Ansprüche 2 bis 4, dadurch gekennzeichnet, dass zusätzlich wenigstens ein sich wenigstens annähernd in Fallrichtung der Deckfläche erstrekkender, rippenförmiger Begrenzungsvorsprung (Vv) vorgesehen ist (Fig. 8).

6. Überdeckungsbauwerk nach einem der vorangehenden Ansprüche, dadurch gekennzeichnet, dass die Schüttfüllungsaufnahmen (SA) mit ihren Begrenzungsvorsprüngen (V, V1) wenigstens teilweise als Deckelement (DE, DE1, ...) ausgebildet sind, welches mit mindestens einem die Deckflächen überspannenden Tragelement (TE, TEI) verbunden ist.

7. Überdeckungsbauwerk nach Anspruch 6, gekennzeichnet durch wenigstens ein als L- oder T-Profilträger ausgebildetes Deckelement (DE, DE1), bei dem wenigstens ein Profilschenkel als Schüttgutauflage (SE) und ein anderer Profilschenkel als Begrenzungsvorsprung (V) der Schüttfüllungsaufnahme (SA) vorgesehen ist.

8. Überdeckungsbauwerk nach Anspruch 6, gekennzeichnet durch wenigstens ein als U-Profilträger ausgebildetes Deckelement (DE2), dessen Profilinnenraum als Schüttfüllungsaufnahme (SA) vorgesehen ist (Fig. 3).

9. Überdeckungsbauwerk nach Anspruch 8, dadurch gekennzeichnet, dass auf mindestens einer Seite des U-Profilträgers ein über die Schenkelabschnitte des U-Profils vorstehender Flanschabschnitt (FA) gebildet ist (Fig. 3).

10. Überdeckungsbauwerk nach einem der vorangehenden Ansprüche, gekennzeichnet durch wenigstens einen als Deckelement und/ oder Tragelement ausgebildeten Plattenkörper (G) mit einer Mehrzahl von an diesen Grundkörper angeformten, rippenförmigen Begrenzungsvorsprüngen (V1) für Schüttfüllungsaufnahmen (SA).

11. Überdeckungsbauwerk nach einem der vorangehenden Ansprüche, insbesondere nach Anspruch 10, dadurch gekennzeichnet, dass wenigstens ein Begrenzungsvorsprung mit mindestens einer gegen Verschiebung in Fallrichtung der Deckfläche und/oder gegen Kippen bezüglich der Deckfläche sichernden Form- oder Stoffschlussverbindung (FS) an einem plattenförmigen oder trägerförmigen Trag- oder Deckelement angesetzt ist.

12. Überdeckungsbauwerk nach Anspruch 11, dadurch gekennzeichnet, dass als plattenseitiger Bestandteil der Formschlussverbindung (FS) mindestens ein im Bereich einer Plattenaussparung angeordneten Armierungsabschnitt (AR) und als begrenzungsseitiger Bestandteil der Formschlussverbindung ein diesen Armierungsabschnitt hintergreifender Fussabschnitt (FA) des Begrenzungsvorsprungs vorgesehen ist.

13. Überdeckungsbauwerk nach Anspruch 11 oder 12, dadurch gekennzeichnet, dass ein plattenförmiges Trag- oder Deckelement mit einer Mehrzahl von als gesonderte Bauelemente ausgebildeten, rippen-, block-, oder stabförmigen Begrenzungsvorsprüngen (V10) mit zugehörigen Formschlussverbindungen (FS) vorgesehen ist (Fig. 10).

14. Überdeckungsbauwerk nach einem der Ansprüche 2 bis 13, dadurch gekennzeichnet, dass wenigstens ein rippenförmiger Begrenzungsvorsprung (V6, V7) mit im wesentlichen geradlinigen Querschnittskonturen und mit einer stumpfwinkligen, insbesondere wenigstens annähernd rechtwinkligen, Neigung gegen die Deckfläche (DF) vorgesehen ist (Fig. 6).

15. Überdeckungsbauwerk nach einem der Ansprüche 2 bis 14, dadurch gekennzeichnet, dass wenigstens ein rippenförmiger Begrenzungsvorsprung (V6) mit polygonal oder gekrümmt verlaufenden, wenigstens teilweise hakenförmig entgegen der Fallrichtung der Deckfläche konkaven Querschnittskonturen vorgesehen ist (Fig. 6).

16. Überdeckungsbauwerk nach einem der vorangehenden Ansprüche, dadurch gekennzeichnet, dass die Begrenzungsvorsprünge und/ oder die Schüttgutauflagen mit Durchlässen (D) für die Drainage der Schüttfüllung versehen sind (Fig. 4).

17. Überdeckungsbauwerk nach einem der vorangehenden Ansprüche, dadurch gekennzeichnet, dass die Begrenzungsvorsprünge und/ oder die Schüttgutauflagen wenigstens teilweise aus flüssigkeitdurchlässigem Material, insbesondere aus porösem Beton (P), bestehen (Fig. 4).

18. Überdeckungsbauwerk nach einem der vorangehenden Ansprüche, insbesondere nach Anspruch 17, dadurch gekennzeichnet, dass unterhalb der Schüttfüllungsaufnahmen (SA) ein sich vorzugsweise parallel zur Deckfläche erstreckendes, flächenhaftes Abdichtungs- und/oder Ableitungselement (PL) angeordnet ist (Fig. 4).

19. Überdeckungsbauwerk nach einem der vorangehenden Ansprüche, gekennzeichnet durch quer zur Fallrichtung der Deckfläche verlaufende, langgestreckte Deckelemente (DE5) bzw. Begrenzungsvorsprünge (V), die durch Form- oder Stoffschlussverbindungen an mindestens einem träger- oder plattenförmigen Tragelement (TE) abgestützt sind (Fig. 7).

20. Uberdeckungsbauwerk nach Anspruch 19, dadurch gekennzeichnet, dass die Deckelemente (DE5) mit wenigstens einem Endabschnitt über einen zugehörigen Biegeträger eines Tragelementes (TE) frei auskragen (Fig. 7).

21. Überdeckungsbauwerk nach Anspruch 19 oder 20, gekennzeichnet durch stufenförmige Auflagen (STA) als Formschlussabstützungen für die Deckelemente (DE4, Fig. 5).

22. Überdeckungsbauwerk nach einem der vorangehenden Ansprüche, dadurch gekennzeichnet, dass ein unter den Schüttfüllungsaufnahmen angeordnetes, plattenförmiges Tragelement (PL) als Flüssigkeitsabdichtung bzw. -ableitung ausgebildet ist (Fig. 3).

23. Überdeckungsbauwerk nach einem der vorangehenden Ansprüche, dadurch gekennzeichnet, dass die äussere Oberfläche der Trag- bzw. Deckelemente wenigstens abschnittsweise strukturiert (ST) ausgebildet ist (Fig. 7).

24. Überdeckungsbauwerk nach einem der vorangehenden Ansprüche gekennzeichnet durch eine nährboden- oder nährlösungshaltige Schüttfüllung für eine pflanzentragende Überdeckung.

25. Überdeckungsbauwerk nach einem der vorangehenden Ansprüche, gekennzeichnet durch eine Schüttfüllung, die wenigstens zu einem Zehntel aus grob-porösem Material besteht.

**Claims**

1. Covering construction having at least one bulk material support and a cover structure forming receptacles (SA) for the bulk material, characterized in that the cover structure includes plate-like beams (DE, DE1-DE5) with beam portions (V, V1-V7) projecting upwards, which prevent the bulk material from gliding downwards and which together with plate portions (SE) being arranged below are forming the said receptacles (SA).

2. Covering construction according to claim 1, characterized in that at least one beam portion projecting upwards is shaped to be a rib-like limiting projection (V, V1) for a bulk material receptacle (SA) and extends over at least a part of the cover surface (DF) under an angle, preferably substantially right-angled, to the direction of descent (Fig. 7).

3. Covering construction according to claim 2, characterized in that at least one limiting projection (V) shaped as a rib extends under an acute angle, preferably of a most around 20°, to the contour lines of the cover surface (DF) (Fig. 7).

4. Covering construction according to claim 2 or 3, characterized by at least limiting projections (V) being shaped as ribs and intersecting each other or extending along lines intersecting each other (Fig. 8).

5. Covering construction according to one of claims 2 to 4, characterized in that provision is made additionally for at least one rib-like limiting projection (Vv) extending at least approximately in the direction of descent of the cover surface (Fig. 8).

6. Covering construction according to anyone of the preceding claims, characterized in that the bulk material receptacles (SA) with their limiting projections (V, V1) are formed at least partly as a cover element (DE, DE1...), which is connected to at least one support element (TE, TE1) spanning the cover surface.

7. Covering construction according to claim 6, characterized by at least one cover element (DE, DE1) formed as an L- or T-profile beam having at least one profile section provided as a bulk material support (SE) and another profile section provided as a limiting projection (V) of the bulk material receptacle (SA).

8. Covering construction according to claim 6, characterized by at least one cover element (DE2) formed as a U-profile beam, the internal space of which is provided as a bulk material receptacle (SA) (Fig. 3).

9. Covering construction according to claim 8, characterized in that at least on one side of the U-profile beam a flange section (FA) is formed which projects beyond the side sections of the U-profile (Fig. 3).

10. Covering construction according to anyone of the preceding claims, characterized by at least one plate body (G) being formed as a cover element and/or a support element and having a plurality of rib-like limiting projections (V1) for bulk material receptacles (SA), said projections being formed in connection with said basic plate body.

11. Covering construction according to anyone of the preceding claims, particularly according to claim 10, characterized in that at least one limiting projection is arranged on a plate-like or beam-like support or cover element by at least one positive or material connection (FS) securing said projection against being shifted in the direction of descent of the cover surface and/or against being tilted in relation to the cover surface.

12. Covering construction according to claim 11, characterized in that at least one reinforcement section (AR) arranged in the region of a plate excavation is provided as a part of the positive connection on the side of the plate and a base section (FA) of the limiting projection gripping behind said reinforcement section is provided as a part of the positive connection on the side of the limiting projection.

13. Covering construction according to claim 11 or 12, characterized in that a plate-like support or cover element is provided having a plurality of rib-, block- or rod-like limiting projections (V10), which are formed as separate structural elements and which are furnished with corresponding positive connections (FS) (Fig. 10).

14. Covering construction according to anyone of claims 2 to 13, characterized in that provision is made for at least one rib-like limiting projection (V6, V7) having substantially rectilinear cross-sectional contours and being arranged under an abtuse, particularly a right-angled inclination against the cover surface (DF) (Fig. 6).

15. Covering construction according to anyone of claims 2 to 14, characterized in that provision is made for at least one rib-like limiting projection (V6) having polygonal or curved and at least partially hook-like cross-sectional contours being concave in the direction against the descent of the cover surface (Fig. 6).

16. Covering structure according to anyone of the preceding claims, characterized in that the limiting projections and/or the bulk material supports are furnished with perforations (D) for draining the bulk material (Fig. 4).

17. Covering construction according to anyone of the preceding claims, characterized in that the limiting projections and/or the bulk material supports consist at least partially of liquid-permeable material, particularly of porous concrete (P) (Fig. 4).

18. Covering construction according to anyone of the preceding claims, particularly according to claim 17, characterized in that a planar sealing and/or draining element (PL), which preferably extends in parallel to the cover surface, is arranged below the bulk material receptacles (SA) (Fig. 4).

19. Covering construction according to anyone of the preceding claims, characterized by elongated cover elements (DE5) or limiting projections (V), which extend transverse to the direction of descent of the cover surface and which are supported by means of positive or material connections on at least one beam- or plate-like support element (TE) (Fig. 7).

20. Covering construction according to claim 19, characterized in that at least one end portion of the cover elements (DE5) are arranged so as to freely project over a corresponding bending beam of a support element (TE) (Fig. 7).

21. Covering construction according to claim 19 or 20, characterized by step-like supports (STA) for positively carrying the cover elements (DE4, Fig. 5).

22. Covering construction according to anyone of the preceding claims, characterized in that a plate-like support element (PL) arranged below the bulk material receptacles is formed so as to be a liquid sealing or draining means (Fig. 3).

23. Covering construction according to anyone of the preceding claims, characterized in that the external surface of the support or cover elements is shaped so as to have a texture (ST) at least by sections (Fig. 7).

24. Covering construction according to anyone of the preceding claims, characterized by bulk material containing nutrient soil or solutions so as to form a plant-carrying coverage.

25. Covering construction according to anyone of the preceding claims, characterized by bulk material consisting to at least one tenth of rough-porous material.

**Revendications**

1. Construction de recouvrement avec au moins une base de support pour une matière en vrac et une construction de couverture inclinée formant des logements (SA) à remplir de matière en vrac caractérisée en ce que la construction de couverture comporte des poutres en forme de plaque (DE, DE1-DE5) avec des parties de poutre (V, V1-V7) saillantes vers le haut qui empêchent le glissement vers le bas de la matière en vrac et qui forment ensemble avec les parties sous forme de plaques (SE) se trouvant en dessous les logements mentionnés (SA).

2. Construction de recouvrement selon la revendication 1, caractérisée en ce qu'au moins une partie de poutre saillante vers le haut est réalisée sous forme de saillie de limitation en forme nervure (V, V1) pour un logement (SA) à remplir de matière en vrac et en ce qu'elle s'étend sur au moins une partie de la surface de couverture (DF) en formant un angle, de préférence approximativement un angle droit, avec la direction de chute (fig. 7).

3. Construction de recouvrement selon la revendication 2, caractérisée en ce qu'au moins une saillie de limitation (V) réalisée sous forme de nervure s'étend en formant un angle aigu ayant de préférence au plus environ 20° avec les lignes de niveau de la surface de couverture (DF) (fig. 7).

4. Construction de recouvrement selon la revendication 2 ou 3, caractérisée en ce qu'elle comprend au moins deux saillies de limitation réalisée sous forme de nervure qui se coupent ou qui sont disposées le long de lignes qui se coupent (V, fig. 8).

5. Construction de recouvrement selon l'une des revendications 2 à 4, caractérisée en ce qu'on prévoit en supplément au moins une saillie de limitation en forme de nervure (Vv) qui s'étend au moins approximativement en direction de la descente de la surface de couverture (fig. 8).

6. Construction de recouvrement selon l'une des revendications précédentes, caractérisée en ce que les logements à remplir de matière en vrac (SA) avec leurs saillies de limitation (V, V1) sont réalisés au moins partiellement sous forme d'élément de couverture (DE, DE1...) lequel est relié à au moins un élément de support (TE, TE1) superposé aux surfaces de couverture.

7. Construction de recouvrement selon la revendication 6, caractérisée en ce qu'elle comprend au moins un élément de couverture (DE, DE1) réalisé sous forme de profilé en L ou T pour lequel au moins une branche du profilé est réalisé sous forme de base de support de matière en vrac (SE) et une autre branche de profilé sous forme de saillie de limitation (V) du logement à remplir de matière en vrac (SA).

8. Construction de recouvrement selon la revendication 6, caractérisée en ce qu'elle comprend au moins un élément de couverture (DE2) réalisé sous forme de profilé en U, l'espace intérieur du profilé étant prévu comme logement à remplir de matière en vrac (fig. 3).

9. Construction de recouvrement selon la revendication 8, caractérisée en ce que sur au moins un côté de la poutre constituée par le profilé en U est formée une partie de rebord (FA) en saillie par rapport aux parties constituant les branches du profilé en U (fig. 3).

10. Construction de recouvrement selon l'une des revendications précédentes, caractérisée en ce qu'elle comprend au moins un membre constitué par une plaque (G) réalisé sous forme d'élément de couverture et/ou d'élément de support comportant une pluralité de saillies de limitation (V1) en forme de nervures réalisées sur ce membre de base pour l'obtention de logements (SA) à remplir de matière en vrac.

11. Construction de recouvrement selon l'une des revendications précédentes, en particulier selon la revendication 10, caractérisée en ce qu'au moins une saillie de limitation est fixée sur un élément de support ou de couverture en forme de plaque ou de poutre par au moins un assemblage obtenu par la forme ou la matière (FS) et réalisant un blocage contre un déplacement dans la direction de descente de la surface de couverture et/ou contre basculement par rapport à la surface de couverture.

12. Construction de recouvrement selon la revendication 11, caractérisée en ce qu'on prévoit comme constituant de l'assemblage par la forme (FS) du côté plaque, au moins un secteur à armature (AR) disposé dans la zone d'un évidement de la plaque et comme constituant de l'assemblage par la forme du côté élément de limitation une partie de pied (FA) de la saillie de limitation s'étendant en dessous du secteur à armature précité.

13. Construction de recouvrement selon la revendication 11 ou 12, caractérisée en ce qu'on prévoit un élément de support ou de couverture en forme de plaque comportant une pluralité de saillies de limitation en forme de nervures, de blocs ou de barres (V10), réalisées sous forme d'éléments de construction séparés avec des assemblages par la forme (FS) correspondants (fig. 10).

14. Construction de recouvrement selon l'une des revendications 2 à 13, caractérisée en ce qu'un prévoit au moins une saillie de limitation en forme de nervure (V6, V7) à contours de section sensiblement rectilignes et à inclinaison de manière à former un angle obtus, en particulier au moins approximativement rectangulaire, avec la surface de couverture (DF) (fig. 6).

15. Construction de recouvrement selon l'une des revendications 2 à 14, caractérisée en ce qu'on prévoit une saillie de limitation (V6, V7) en forme de nervure à contours de section concaves de forme polygonale ou courbe et au moins partiellement en forme de crochet dirigé en sens opposé de la direction de descente de la surface de couverture (fig. 6).

16. Construction de recouvrement selon l'une des revendications précédentes, caractérisée en ce que les saillies de limitation et/ou les bases de support de la matière en vrac sont munies de passages (D) pour le drainage de la matière de remplissage en vrac (fig. 4).

17. Construction de recouvrement selon l'une des revendications précédentes, caractérisée en ce que les saillies de limitation et/ou les bases de support de la matière en vrac sont au moins partiellement en un matériau perméable au liquide, en particulier en béton poreux (P) (fig. 4).

18. Construction de recouvrement selon l'une des revendications précédentes, en particulier selon la revendication 17, caractérisée en ce qu'un élément d'étanchéification et/ou de déversement (PL) en forme de surface, disposé de préférence parallèlement à la surface de couverture, se trouve en dessous des logements (SA) recevant la matière en vrac (fig. 4).

19. Construction de recouvrement selon l'une des revendications précédentes, caractérisée en ce qu'elle comprend des éléments de couverture (DE5) ou des saillies de limitation (V) allongés, disposés transversalement à la direction de descente de la surface de couverture, qui prennent appui au moyen d'assemblages par la forme ou la matière sur au moins un élément de support (TE) en forme de poutre ou de plaque (fig. 7).

20. Construction de recouvrement selon la revendication 19, caractérisée en ce ce que les éléments de couverture (DE5) font saillie librement avec au moins une partie extrême au-delà d'une poutre correspondante sollicitée en flexion d'un élément de support (TE) (fig. 7).

21. Construction de recouvrement selon la revendication 19 ou 20, caractérisée en ce qu'elle comprend des bases de support (STA) en gradins comme appuis grâce à la forme pour les éléments de couverture (DE4, fig. 5).

22. Construction de recouvrement selon l'une des revendications précédentes, caractérisée en ce qu'un élément de support (PL) en forme de plaque sous les logements à remplir de matière en vrac est réalisé sous forme d'élément d'étanchéité ou de dérivation de liquide (fig. 3).

23. Construction de recouvrement selon l'une des revendications précédentes, caractérisée en ce que la surface extérieure des éléments de support ou de couverture est au moins par secteurs dotée d'une structure (ST) (fig. 7).

24. Construction de recouvrement selon l'une des revendications précédentes, caractérisée en ce qu'elle comprend un remplissage de matière en vrac contenant du sol nutritif ou une solution nutritive pour un recouvrement comportant des plantes.

25. Construction de recouvrement selon l'une des revendications précédentes, caractérisée en ce qu'elle comprend un remplissage de matière en vrac qui est constitué pour au moins un dixième d'un matériau macroporeux.

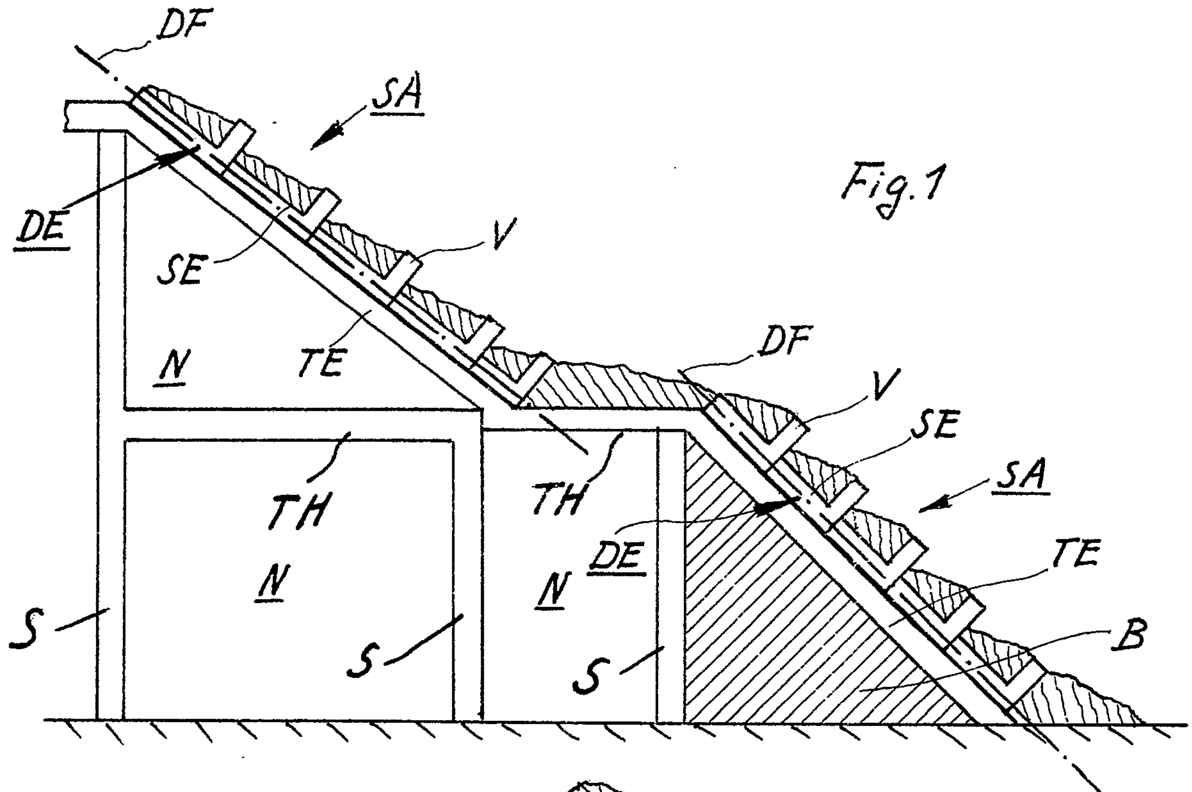


Fig.1

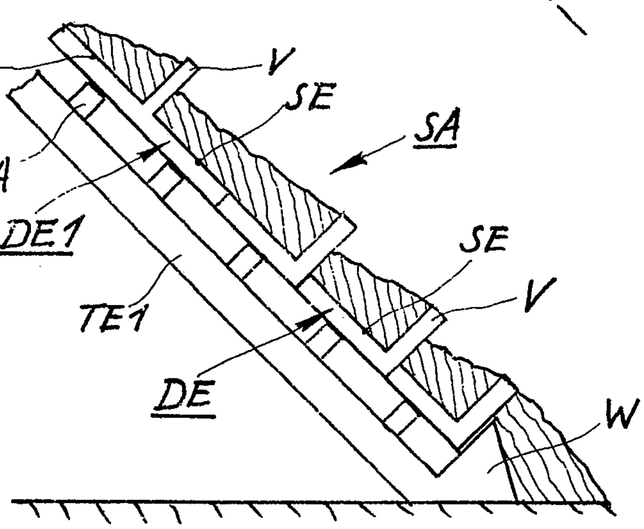


Fig.2

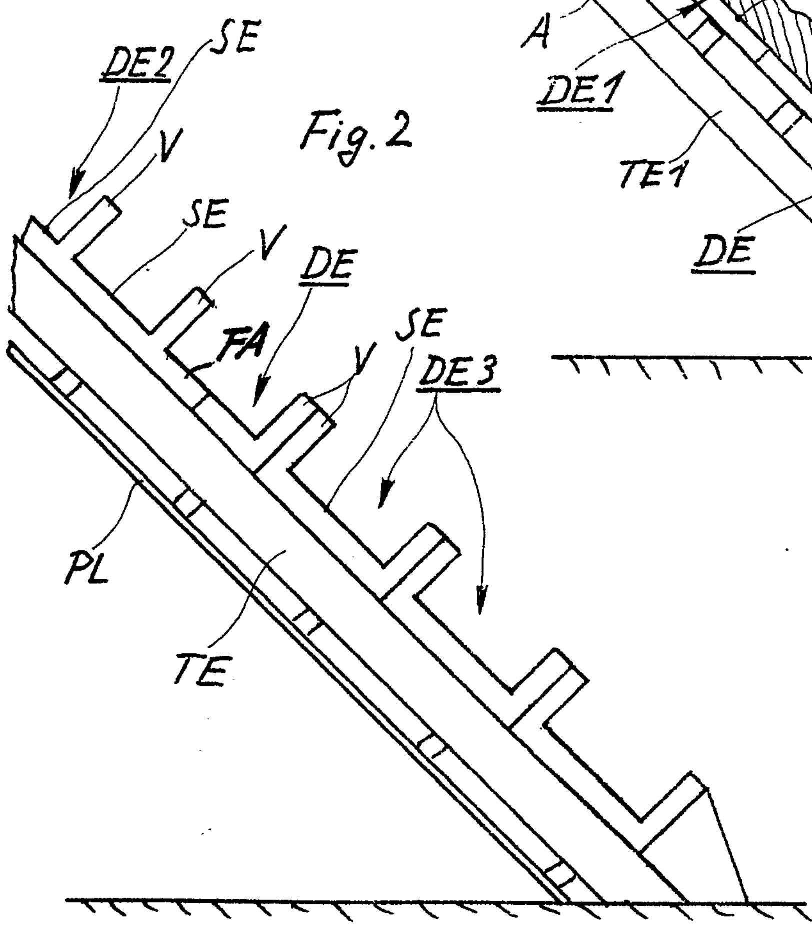


Fig.3

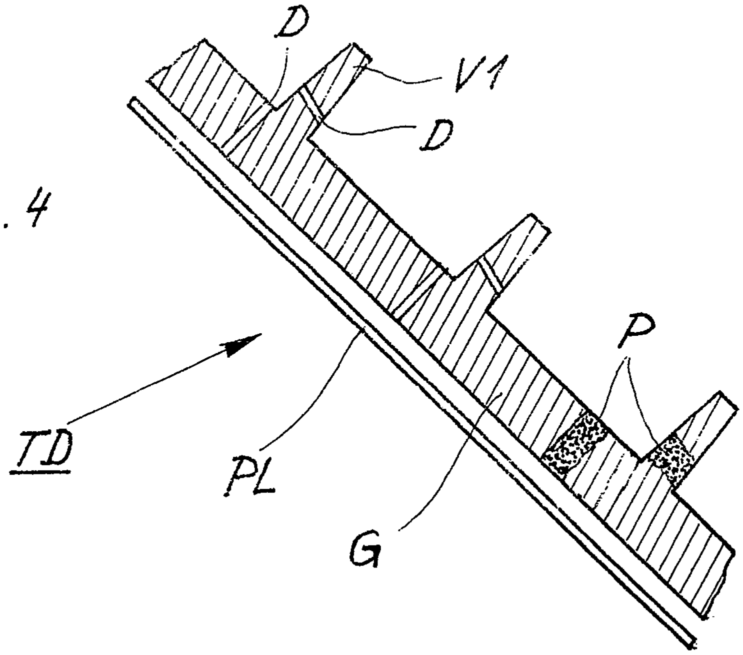


Fig. 4

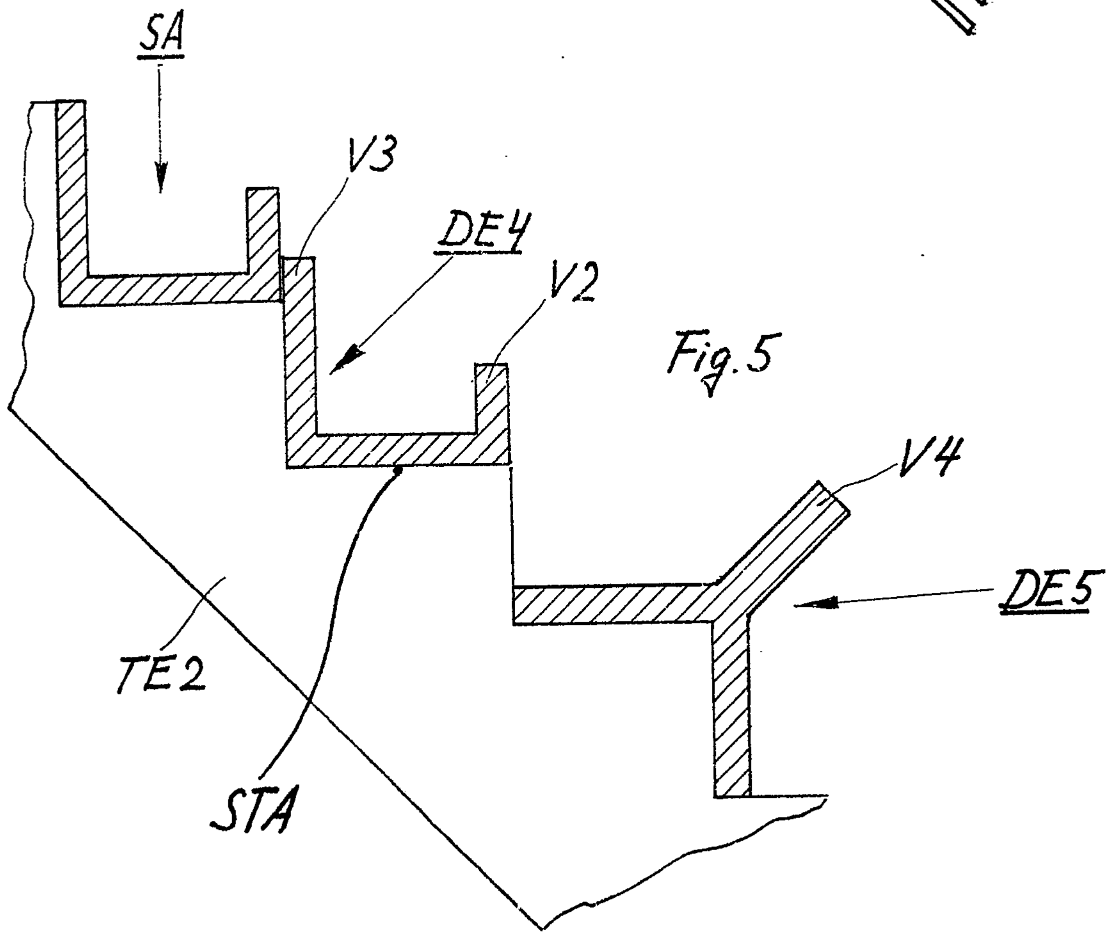


Fig. 5

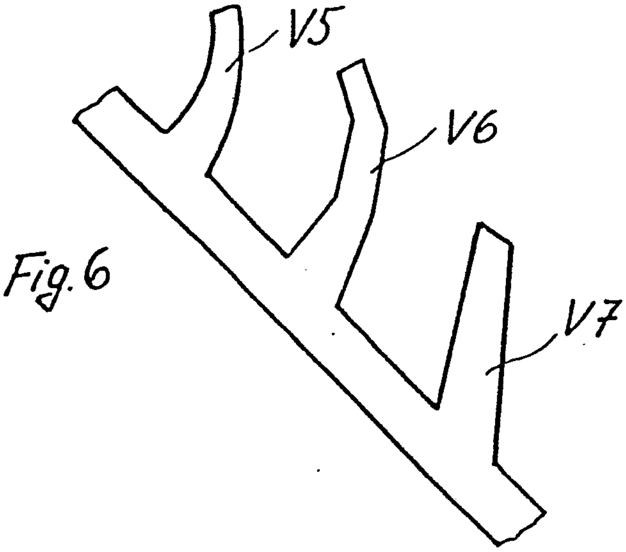


Fig. 6

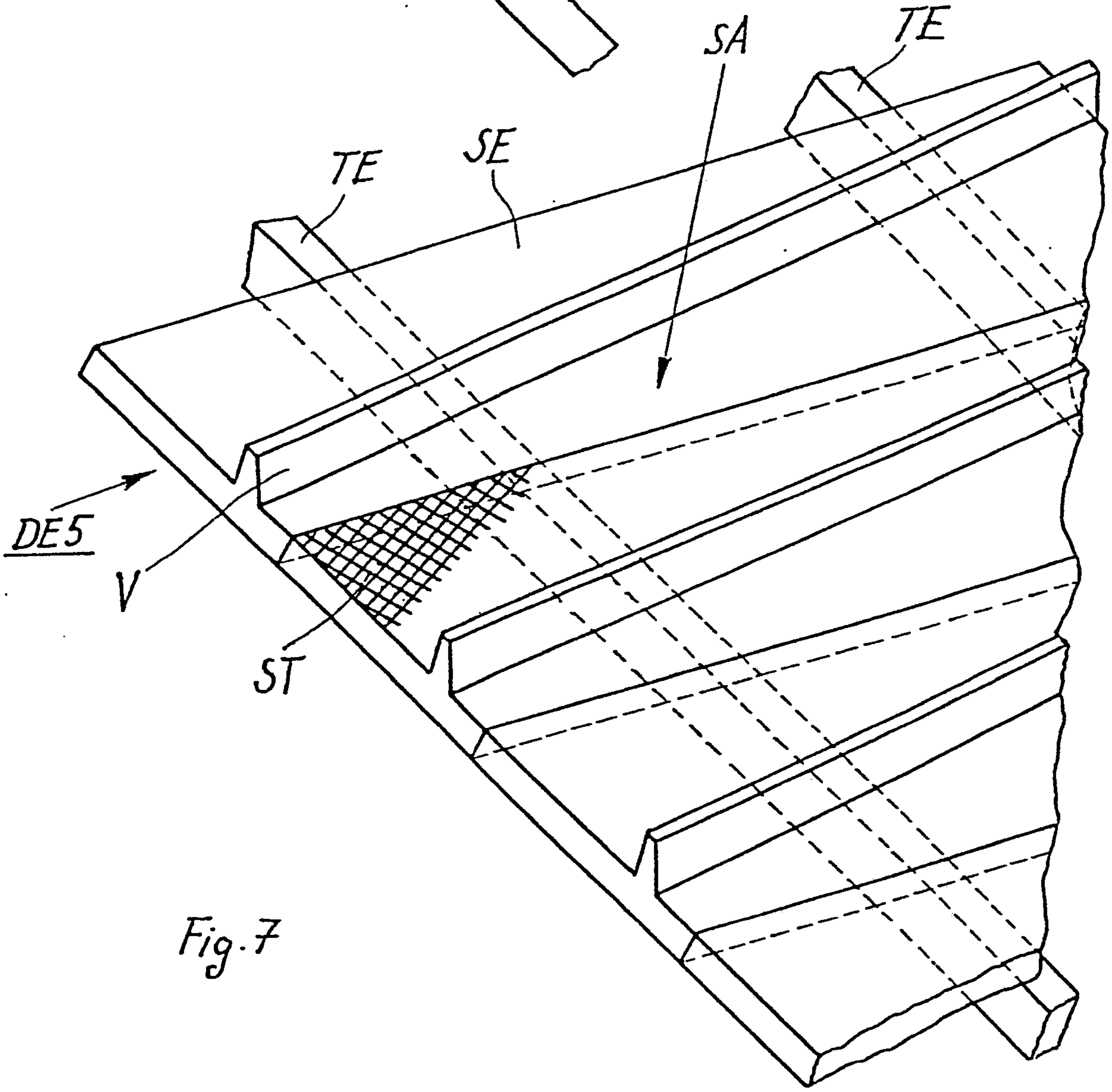


Fig. 7

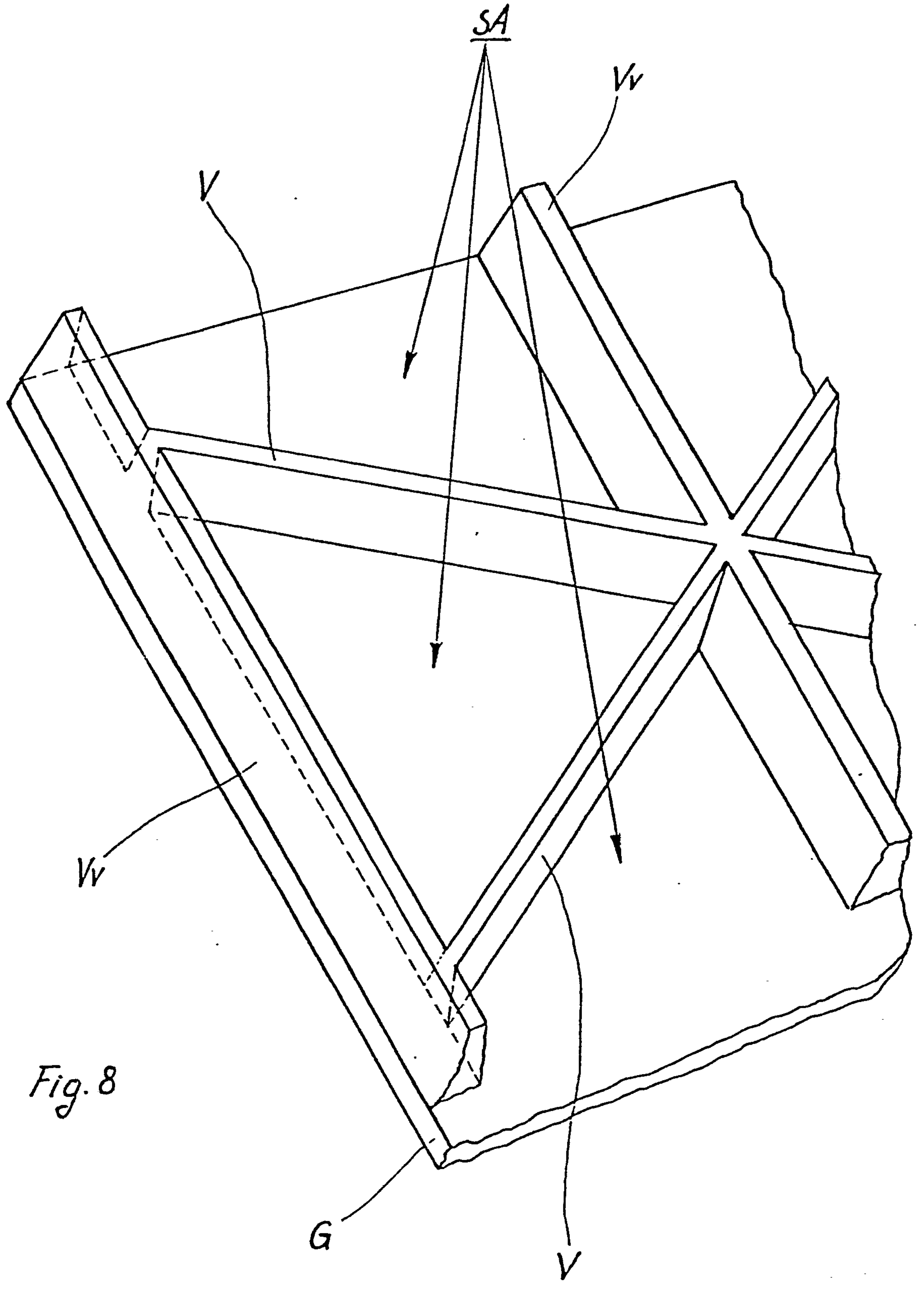


Fig. 8

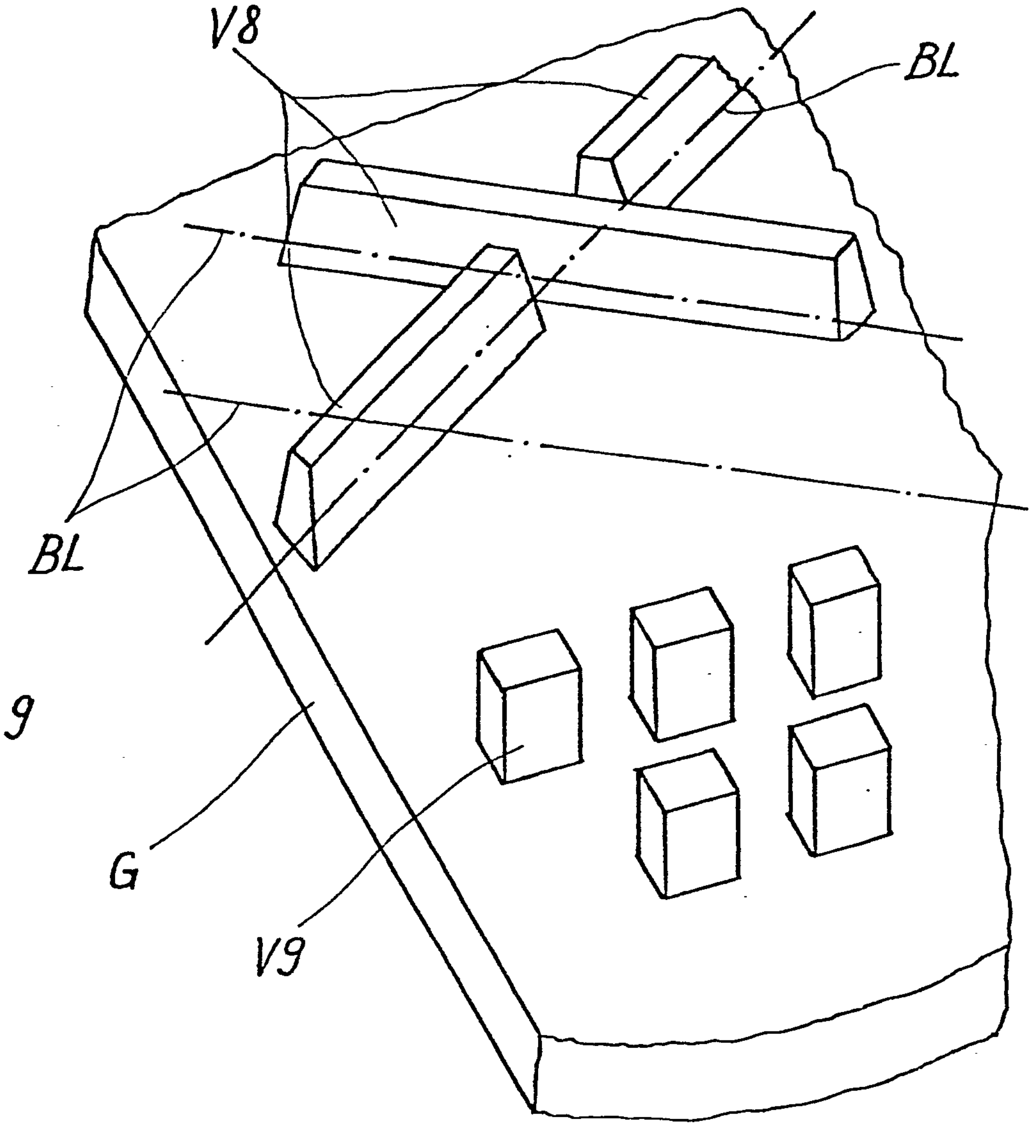


Fig. 9

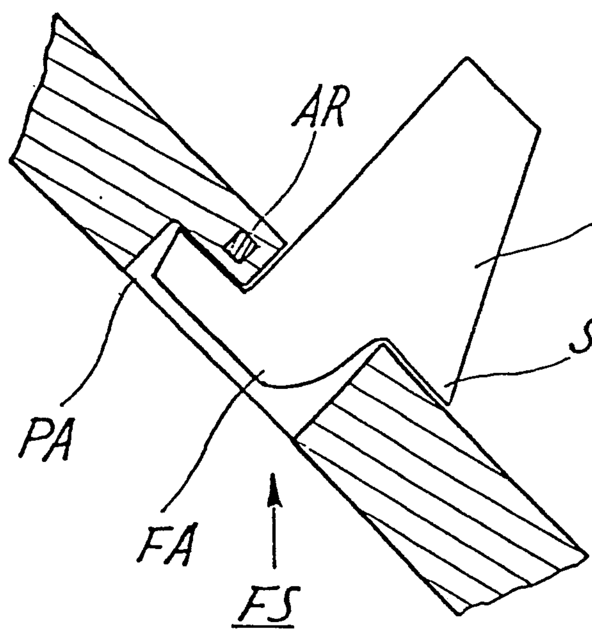


Fig. 10